Europäisches Patentamt

European Patent Office

Office européen des brevets

(11) Veröffentlichungsnummer : **0 187 241**
B1

# (12) EUROPÄISCHE PATENTSCHRIFT

(45) Veröffentlichungstag der Patentschrift :
17.05.89

(51) Int. Cl.⁴ : **G 11 B 23/087**

(21) Anmeldenummer : 85114964.1

(22) Anmeldetag : 26.11.85

(54) Sperrmechanismus für Videokassetten.

(30) Priorität : 08.12.84 DE 3444861

(43) Veröffentlichungstag der Anmeldung :
16.07.86 Patentblatt 86/29

(45) Bekanntmachung des Hinweises auf die Patenterteilung : 17.05.89 Patentblatt 89/20

(84) Benannte Vertragsstaaten :
DE FR GB IT NL

(56) Entgegenhaltungen :
FR-A- 2 390 801
FR-A- 2 508 223
GB-A- 2 020 628
GB-A- 2 099 400
GB-A- 2 125 008
US-A- 4 163 533
US-A- 4 195 797

(73) Patentinhaber : AGFA-GEVAERT AG
D-5090 Leverkusen 1 (DE)

(72) Erfinder : Pertzsch, Albert, Dipl.-Ing.
Leutstettener Strasse 29
D-8000 München 71 (DE)
Erfinder : Brunner, Hubert
Mühlgasse 4a
D-8911 Weil (DE)
Erfinder : Zeroni, Ludwig
Nelkenstrasse 40
D-8012 Ottobrunn (DE)

EP 0 187 241 B1

## Beschreibung

Die Erfindung betrifft eine Videokassette mit zwei planparallel angeordneten Spulen zum Auf- und Abwickeln eines Magnetbandes und mit einem Sperrmechanismus bestehend aus einer auf einem Pfosten als Drehachse aufsteckbaren, an einer Aufsteckhülse angeformten, schwenkbaren, zweiarmigen Sperrklinke für jede Spule, wobei in Außerbetriebstellung der Kassette ein erster Hebelarm in einen gezähnten Spulenflansch greift und der zweite Hebelarm an dem Ausrückbauteil eines vertikal verdrehbaren Freigabehebels anliegt und wobei an jeder Sperrklinke ein Vorspannarm angeformt ist, dessen freies Ende einen Abstützpunkt im Innenraum der Kassette besitzt.

Die handelsüblichen Videokassetten zwei planparallele Bandspulen, von denen das Magnetband auf- bzw. abgewickelt wird. Zum Abspielen auf dem Recorder wird das Band aus der Kassette gezogen. Um ein unbeabsichtigtes Lockern des Bandwickels bei Nichtgebrauch zu verhindern, enthalten die Kassetten Sperrvorrichtungen. Die dem Kassettenboden benachbarten Spulenflansche sind an ihrem Umfang gezähnt. Die schwenkbar gelagerten Sperrklinken selbst bestehen aus zweiarmigen Hebeln, deren einer Arm bei Nichtgebrauch an einer gezähnten Spule und deren zweiter Arm an einem Freigabehebel anliegt. Die Vorspannung der Sperrklinken erfolgt mittels einer Drahtfeder für jede der beiden Sperrklinken. Ein Federende greift an einem Hebelarm an, während das andere Ende sich an einem Stift abstützt. Durch den Einsatz von Drahtfedern werden die Herstellungskosten einer Videokassette ungünstig beeinflußt, denn die Federn bedingen Lagerhaltung, Qualitätsprüfung u. s. w. ; auch der Einbau ist angesichts des beengten Innenraums einer Kassette mühsam. Um diese Nachteile zu vermeiden, wurde bereits verschiedentlich vorgeschlagen, die Drahtfedern durch angespritzte Kunstsoffedern an den Sperrklinken zu ersetzen. So wurden in DE-A-27 54 935 gekrümmte Vorspannarme aus Kunststoff, die einerseits am Hebelarm der Sperrklinke angespritzt sind und sich andererseits an der Innenseite der kassette abstützen, beschrieben. Ähnliches gilt auch für DE-A-28 20 866. In DE-A-28 37 886 wird anstelle von Drahtfedern eine einzige federnde Platte mit einem flachen und zwei gebogenen Teile 4 verwendet. Der flache Teil liegt an der Seitenwand des Gehäuseunterteils an, die gebogenen Bereiche berühren die Sperrklinken. In DE-A-33 28 353 und DE-U-81 21 098 ist an den Sperrklinken ein federelastischer Arm aus Kunststoff angespritzt, der sich gegen einen stationären Stift bzw. an der Innenseite der Kassette abstützt. In GB-A-20 99 400 oder US-A-42 32 840 wird ein einziger, gekrümmter Kunststoffarm verwendet. Die beiden Enden sind an den beiden benachbarten Hebelarmen der Sperrklinken angespritzt, während der gekrümmte Teil gegen die Innenwand des Kassetengeshäuses drückt.

In all den genannten Fällen bedarf es einer relativ grossen Biegespannung bei der Betätigung der Kunststoffedern, d. h. die Federn müssen aus Elastizitätsgründen ebenso einen relativ dünnen Querschnitt aufweisen, was ein frühzeitiges Ermüden des Materials zur Folge hat.

Um diese Nachteile zu umgehen, bestand die Aufgabe, eine Videokassette der eingangs genannten gattungsmäßigen Art zu finden, bei welcher die Biegespannung der Vorspannarme herabgesetzt ist.

Erfindungsgemäß gelöst wurde die Aufgabe mit einer Videokassette mit den im kennzeichnenden Teil des Anspruchs 1 genannten Merkmalen.

Die geringe physikalische Hebellänge des Vorspannarmes der erfindungsgemäß Sperrklinke erzeugt bei einem relativ grossen Federquerschnitt eine entsprechende Kraft zur Betätigung der Sperrklinke im Sperr- und Freigabestellung. Für die Funktionssicherheit der Kassette ist es von erheblicher Bedeutung, daß infolge der geringen Auslenkung des Vorspannarmes ein frühzeitiges Ermüden des Kunststoffs verhindert wird.

Details der Erfindung sind in der Beschreibung und den Unteransprüchen wiedergegeben. Im Folgenden wird die Erfindung anhand von Zeichnungen näher erläutert und zwar zeigen

Fig. 1 eine Teilaufsicht auf ein Gehäuseunterteil einer Videokassette entsprechend dem Stand der Technik mit Sperrklinken und vorgespannten Drahtfedern,

Fig. 2 eine ebensolche Teilaufsicht mit den erfindungsgemäßen Sperrklinken in Sperrstellung,

Fig. 3 eine Teilaufsicht mit geschlitztem zylindrischem Pfostenende,

Fig. 4 eine Teilaufsicht auf eine erfindungsgemäße Sperrklinke mit am Pfostenende angeformtem Stift,

Fig. 5 eine Teilaufsicht entsprechend Fig. 2 mit den erfindungsgemäßen Sperrklinken in Freigabestellung.

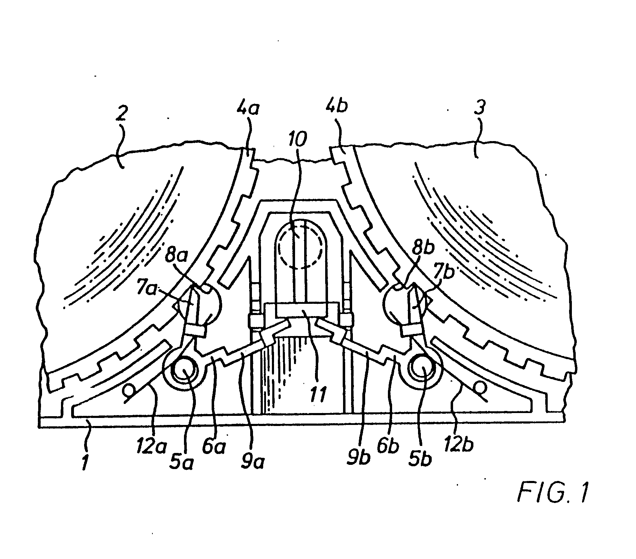

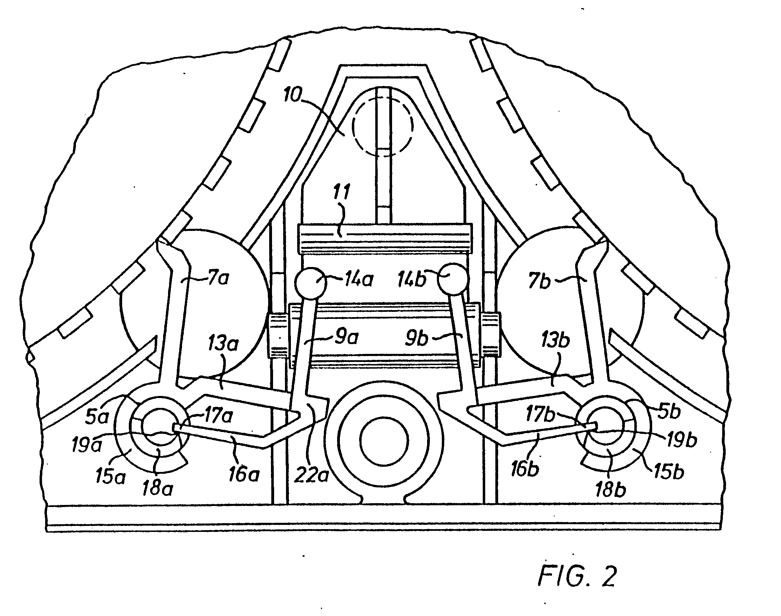

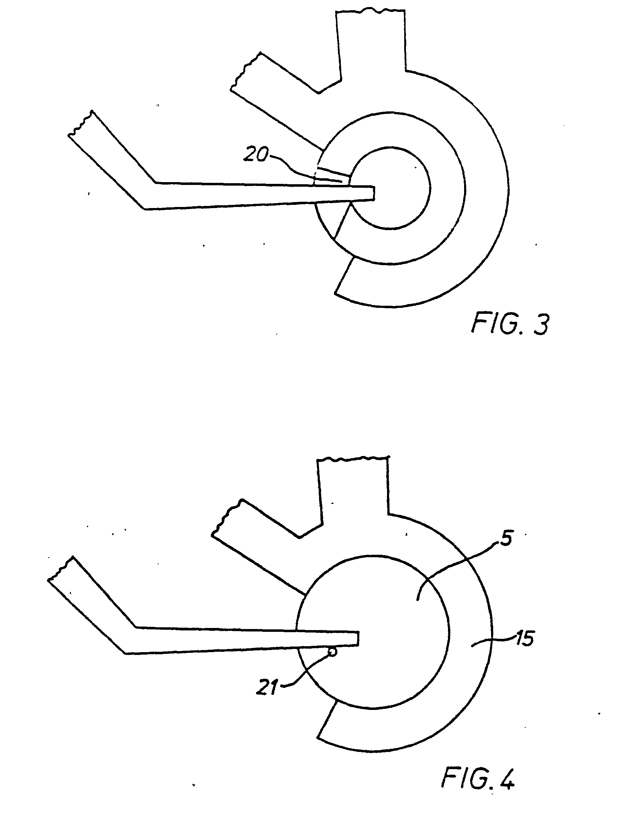

Fig. 1 stellt eine Teilaufsicht auf ein Gehäusenterteil 1 einer herkömmlichen Videokassette dar mit zwei Bandspulen 2, 3, deren untere Spulenflansche 4a, b gezähnt sind. Die Kassette enthält ferner einen Sperrmechanismus mit je einer auf einem Pfosten 5a, b aufsteckbaren und schwenkbaren Sperrklinke 6a, b. Deren erster Hebelarm 7a, b verhindert beim Eingreifen zwischen die Zähne des Spulenflansches eine unerwünschte Drehung der Spulen. Der Schwenkbereich des ersten hebelarmes auf die Spule zu ist durch den Hüllkreis 8a, b — eine kreisförmige Vertiefung im Kassettenboden — begrenzt. Der zweite Hebelarm 9a, b liegt am Ausrückbauteil 11 des Freigabehebels 10 an. Zur Vorspannung des Sperrmechanismus dienen üblicherweise Drahtfedern 12a, b, deren eines Ende am ersten Hebelarm und deren anderes Ende an einem Stift anliegt. Wie in Fig. 2 gezeigt, liegt das Hauptmerkmal der Erfindung darin, nicht nur die Drahtfedern durch eine Blattfeder aus Kunststoff (auch Vorspannarm genannt) zu ersetzen, sondern der Gesamtheit der Sperrklinken eine besondere geometrische Form zu geben, die eine möglichst geringe Auslenkung des Vorspannarmes beim Verschwenken der Sperrklinken gestattet. Dazu sind die beiden hebelarme 7a, b und 9a, b durch einen Steg 13a, b verbunden, der im rechten Winkel zu den Hebelarmen verläuft. Die Hebelarme und der Steg ergeben eine U-Form. Der Abstand zwischen den Hebelarmen ist so gewählt, daß zur Erbringung ihrer Funktion (Fig. 2) der erste Hebelarm in Sperrstellung zwischen die Zähne des unteren Spulenflansches in Eingriff kommt und das freie Ende des zweiten Hebelarmes am Ausrückbauteil 11 des Freigabehebels 10 anliegt. Um beim Auslenken des Freigabehebels ein einwandfreies Abrollen der Hebelarme zu erreichen, ist deren freies Ende abgerundet 14a, b. Die Sperrklinkeneinheit ist an eine Aufsteckhülse 15a, b angeformt, die auf den gegebenenfalls hohlzylindrischen Pfosten 5a, b aufgesteckt wird. Diese besondere geometrische Form der Sperrklinken ist gewählt, um für den Vorspannarm 16a, b eine größtmögliche, wirksame Federlänge zu schaffen. Der Vorspannarm ist am zweiten Hebelarm angeformt und so lang, daß sein freies Ende 17a, b am Pfosten, der besonders ausgebildet ist, anliegt. Der Pfosten selbst kann als Bolzen oder als Hülse, die in der Höhe mit der des ersten Hebelarmes übereinstimmt, gestaltet sein. Um als Anlage für den Vorspannarm dienen zu können, ist deshalb das freie Pfostenende halbzylindrisch 18a, b (Fig. 2) geformt. Die eine der beiden Schnittflächen am hohlzylindrischen Körper ist derart abgeschrägt, daß die Auflage des Vorspannarmes nur an deren Innenkante 19a, b erfolgt. Dies ist ein Mittel, um die Betätigungskraft, die auf den Vorspannarm beim Schwenken der Sperrklinken ausgeübt wird, nicht zu stark werden zu lassen. Wenn das Pfostenende ringförmig ausgebildet ist, genügt ein Schlitz 20 (Fig. 3), um den Vorspannarm anliegen zu lassen. Die eine der beiden Schlitzflächen soll ebenso, wie oben geschildert, abgeschrägt sein. Wenn die Höhe des Pfostens 5 mit der der Aufsteckhülse 15 der Sperrklinke übereinstimmt, kann ein auf dem Pfostenende exzentrisch angeordneter Stift 21 (Fig. 4) als Anlage dienen. Der zweite Hebelarm 9a ist im allgemeinen höher als der erste, er läßt sich an seinem unteren Ende L-förmig 22a formen. An dem kurzen Schenkel des Zweiten Hebelarmes schließt sich der Vorspannarm an, wordurch eine Vergrösserung seiner wirksamen Länge erreicht wird.

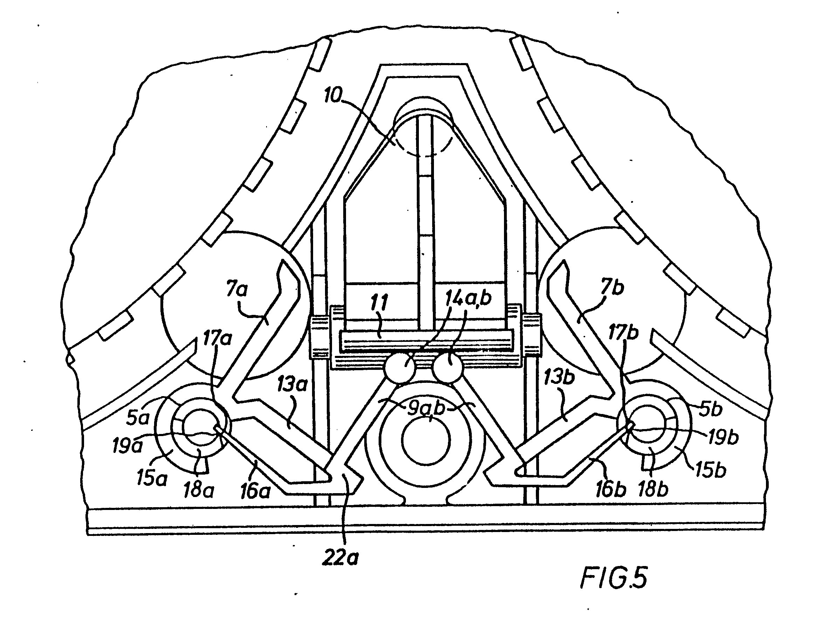

Im Vergleich von Fig. 2 und 5 läßt sich der besondere Vorteil der Erfindung erkennen. Fig. 2 zeigt die Sperrklinken im Eingriff, Fig. 5 die Sperrklinken in Freigabestellung. Wie ersichtlich, liegen Drehpunkt der Sperrklinken und Auslenkpunkt der Vorspannarme sehr nahe beieinander. Dadurch kann die Materialstärke des Vorspannarmes gegenüber den eingangs der Beschreibung geschilderten Lösungen relativ dick sein, was ein frühzeitiges Ermüden des Kunststoffes ausschließt. Ein weiterer Vorteil der erfindungsgemäßen Sperrklinken kann darin gesehen werden, daß sie sich in das Gehäuseunterteil einer handelsüblichen Kassette einbauen lassen, wobei lediglich die Anlage für den Vorspannarm geschaffen werden muß. Dies ist spritzgußtechnisch ohne großen Aufwand zu verwirklichen.

**Patentansprüche**

1. Videokassette mit zwei planparallel angeordneten Spulen (2, 3) zum Auf- und Abwickeln eines Magnetbandes und mit einem Sperrmechanismus bestehend aus einer auf einem Pfosten (5a, 5b) als Drehachse aufsteckbaren, an einer Aufsteckhülse (15a, 15b) angeformten scvhwenkbaren, zweiarmigen Sperrklinke für jede Spule, wobei in Außerbetriebstellung der Kassette ein erster Hebelarm (7a, 7b) in einen gezähnten Spulenflansch (4a, 4b) greift und der zweite Hebelarm (9a, 9b) an dem Ausrückbauteil (11) eines vertikal verdrehbaren Freigabehebels (10) anliegt und wobei an jeder Sperrklinke ein Vorspannarm (16a, 16b) angeformt ist, dessen freies Ende (17a, 17b) einen Abstützpunkt (19a, 19b) im Innenraum der Kassette besitzt, gekennzeichnet durch folgende Merkmale
— die beiden hebelarme (7a, b ; 9a, b) sind durch einen Steg (13a, b) verbunden, der im rechten Winkel zu den hebelarmen verläuft
— der erste Hebelarm (7a, b) ist an der Aufsteckhülse (15a, b) angeformt
— der Vorspannarm (16a, b) ist am zweiten Hebelarm (9a, b) angeformt
— der Abstützpunkt (19a, b) des Vorspannarms befindet sich nahe dessen freiem Ende (17a, b) gehäusefest am Pfosten (5a, b)
— der Abstand des Abstützpunktes von der Drehachse der Sperrklinke ist kleiner als der Radius des Pfostens.

2. Videokassette nach Anspruch 1 dadurch gekennzeichnet, daß ein halbzylindrisch ausgebildetes Pfostenende 18a, b als Anlage für den Vorspannarm dient.

3. Videokassette nach Anspruch 1 dadurch gekennzeichnet, daß der Pfosten als Hülse ausgebildet ist und ein Schlitz 20 am Pfostenende als Anlage dient.

4. Videokassette nach Anspruch 1 dadurch gekennzeichnet, daß die Schnittfläche des halbzylindrich oder geschlitzten Pfostenendes derart abgeschrägt ist, daß der Vorspannarm nur am Innenumfang 19a, b des Pfostenendes anliegt.

5. Videokassette nach Anspruch 1 dadurch gekennzeichnet, daß ein exzentrisch angeordneter Stift 21 am Pfostenende als Anlage dient.

6. Videokassette nach Anspruch 1 dadurch gekennzeichnet, daß der Vorspannarm gekrümmt oder geknickt ausgebildet ist.

7. Videokassette nach Anspruch 1 dadurch gekennzeichnet, daß die am Ausrückbauteil 11 des Freigabehebels 10 anliegenden Hebelarme 9a, b der Sperrklinken am unteren Ende L-förmig 22a ausgebildet sind und die Vorspannarme an deren kurzen Schenkel angeformt sind.

8. Videokassette nach Anspruch 1 dadurch ge-

5 · EP 0 187 241 B1 · 6

kennzeichnet, daß die am Ausrückbauteil des Freigabehebels anliegenden Hebelarme an ihren freien Enden 14a, b abgerundet sind.

## Claims

1. Video cassette having two plane-parallel arranged reels (2, 3) for the winding-up and unwinding of a magnetic tape and having a locking mechanism consisting of a pivotal, two-armed catch for each reel, which catch is integrally attached to a fitting sleeve (15a, 15b) and can be fitted on a peg (5a, 5b) as pivot axis, in which arrangement, is non-operating position of the cassette, a first lever arm (7a, 7b) engages in a toothed reel flange (4a, 4b) and the second lever arm (9a, 9b) bears against the disengagement component (11) of a vertically pivotal release lever (10) and in which arrangement a pretensioning arm (16a, 16b) is integrally attached to each catch, the free end (17a, 17b) of which arm has a support point (19a, 19b) in the interior of the cassette, characterized by the following features
— the two lever arms (7a, b ; 9a, b) are connected by a cross-piece (13a, b), which runs at a right angle to the lever arms
— the first lever arm (7a, b) is integrally attached to the fitting sleeve (15a, b)
— the pretensioning arm (16a, b) is integrally attached to the second levers arm (9a, b)
— the support point (19a, b) of the pretensioning arm is located close to its free end (17a, b) fixedly on the peg (5a, b)
— the distance of the support point from the pivot axis of the catch is smaller than the radius of the peg.

2. Video cassette according to Claim 1, characterized in that a semicylindrically designed peg end 18a, b serves as stop for the pretensioning arm.

3. Video cassette according to Claim 1, characterized in that the peg is designed as a sleeve and a slit 20 on the peg end serves as a stop.

4. Video cassette according to Claim 1, characterized in that the sectional surface of the semicylindrical or slit peg end is bevelled in such a way that the pretensioning arm bears only against the inner circumference 19a, b of the peg end.

5. Video cassette according to Claim 1, characterized in that an eccentrically arranged pin 21 on the peg end serves as a stop.

6. Video cassette according to Claim 1, characterized in that the pretensioning arm is of curved or bent design.

7. Video cassette according to Claim 1, characterized in that the lever arms 9a, b of the catches, bearing against the disengagement component 11 of the release lever 10, are of L-shaped design 22a at the lower end and the pretensioning arms are integrally attached to their short member.

8. Video cassette according to Claim 1, characterized in that the lever arms bearing against the disengagement component of the release lever are rounded off at their free ends 14a, b.

## Revendications

1. Cassette vidéo comportant deux bobines (2, 3), disposées dans des plans parallèles, pour l'enroulement et le déroulement d'une bande magnétique et comportant un mécanisme de verrouillage constitué d'un cliquet de verrouillage à deux bras pour chaque bobine, pivotant, à enfiler sur un montant (5a, 5b) servant d'axe de rotation, venu de moulage sur un fourreau à enfiler (15a, 15b), un premier bras de levier (7a, 7b) s'engageant dans un flasque de bobine (4a, 4b) denté et le deuxième bras de levier (9a, 9b) étant appliqué contre l'élément de débrayage (11) d'un levier de déverrouillage (10) pouvant tourner verticalement, en position hors service de la cassette, et un bras de précontrainte, (16a, 16b) dont l'extrémité libre (17a, 17b) présente un point d'appui (19a, 19b) à l'intérieur de la cassette, étant moulé sur chaque cliquet de verrouillage, caractérisée par les caractéristiques suivantes :
— les deux bras de levier (7a, b ; 9a, b) sont reliés par une barrette (13a, b) qui est à angle droit par rapport aux bras de levier,
— le premier bras de levier (7a, b) est venu de moulage sur le fourreau à enfiler (15a, b),
— le bras de précontrainte (16a, b) est venu de moulage sur le deuxième bras de levier (9a, b),
— le point d'appui (19a, b) du bras de précontrainte se trouve à proximité de l'extrémité libre de ce dernier (17a, b) solidaire du boîtier, sur le montant (5a, b),
— la distance séparant le point d'appui de l'axe de rotation du cliquet de verrouillage est inférieure au rayon du montant.

2. Cassette vidéo selon la revendication 1, caractérisée en ce qu'une extrémité de montant (18a, b) semi-cylindrique sert de butée au bras de précontrainte.

3. Cassette vidéo selon la revendication 1, caractérisée en ce que le montant est un fourreau et en ce qu'une fente (20) placée à l'extrémité du montant sert de butée.

4. Cassette vidéo selon la revendication 1, caractérisée en ce que la surface de section de l'extrémité du montant, semi-cylindrique ou fendue, est chanfreinée de façon telle que le bras de précontrainte ne s'applique que contre la circonférence intérieure (19a, b) de l'extrémité du montant.

5. Cassette vidéo selon la revendication 1, caractérisée en ce qu'un doigt (21), disposé excentrique à l'extrémité du montant, sert de butée.

6. Cassette vidéo selon la revendication 1, caractérisée en ce que le bras de précontrainte est courbé ou plié.

7. Cassette vidéo selon la revendication 1, caractérisée en ce que les bras de levier (9a, b) des cliquets de verrouillage, s'appliquant contre l'élément de débrayage (11) du levier de déverrouillage (10), sont en forme de L à l'extrémité inférieure (22a) et en ce que les bras de précontrainte sont venus de moulage sur la petite branche du L.

8. Cassette vidéo selon la revendication 1, caractérisée en ce que les bras de levier s'appliquant contre l'élément de débrayage du levier de déverrouillage sont arrondis à leurs extrémités libres (14a, b).

FIG.1

EP 0 187 241 B1

FIG. 2

EP 0 187 241 B1

FIG. 3

FIG. 4

FIG.5